# EUROPEAN PATENT APPLICATION

(11) **EP 4 227 263 A1**
(43) Date of publication of application: **16.08.2023**
(21) Application number: 21877650.8
(22) Date of filing: 06.10.2021
(51) Int. Cl.: C01B 32/40, B01D 53/04, B01D 53/047, B01D 53/26, B01J 23/42, B01J 37/10

(54) **METHOD FOR REMOVING OXYGEN MOLECULE AND METHOD FOR PURIFYING CARBON MONOXIDE**

(30) Priority: 08.10.2020 JP 2020170329
(71) Applicant: Resonac Corporation, Tokyo 105-8518 (JP)
(72) Inventor: KAWAUCHI, Daichi, Tokyo 105-8518 (JP); DOU, Jun, Tokyo 105-8518 (JP); KAGA, Kazunari, Tokyo 105-8518 (JP)
(74) Representative: Strehl Schübel-Hopf & Partner
(86) International application number: PCT/JP2021/036934
(87) International publication number: WO 2022/075351

(57) **Abstract**

There is provided a method for purifying carbon monoxide with which it is possible to obtain high-purity carbon monoxide. In a catalyst preparation step, water is removed from a platinum catalyst by heat treatment of a platinum catalyst in a heat treatment vessel. This heat treatment is carried out until the concentration of water contained in the inert gas discharged from the heat treatment vessel after being supplied to the heat treatment vessel and used in the heat treatment is less than 1000 vol ppm. In an oxygen molecule removal step, the carbon-monoxide-containing gas is brought into contact with a platinum catalyst, an oxygen molecule is removed from the carbon-monoxide-containing gas, and gas after oxygen molecule removal is obtained. In a carbon dioxide removal step, carbon dioxide is removed from gas after oxygen molecule removal using a carbon dioxide adsorbent, and gas after carbon dioxide removal is obtained. In a pressure swing adsorption step, carbon monoxide is recovered from gas after carbon dioxide removal by a pressure swing adsorption method, and purified carbon monoxide having a purity of 99.95 vol% or more is obtained.

## Description

### Technical Field

The present invention relates to a method for removing an oxygen molecule and a method for purifying carbon monoxide.

### Background Art

Carbon monoxide (CO) is used as an additive gas in the dry etching step when manufacturing silicon semiconductors for non-volatile memories such as NAND flash memory, and carbon monoxide having a high purity of about 99.99 vol% is required for such application.

As a method for purifying carbon monoxide, a pressure swing adsorption method (PSA method) is generally employed. For example, PTLs 1 and 2 disclose a method of purifying carbon monoxide by a pressure swing adsorption method using a pressure swing adsorbent in which cuprous chloride (CuCl) is supported on a carrier such as alumina or activated carbon.

### Citation List

### Patent Literature

PTL 1: JP 5578608 B
PTL 2: JP 5875111 B
PTL 3: WO 2019/171882

### Summary of Invention

### Technical Problem

However, the carbon monoxide adsorption performance of the pressure swing adsorbent deteriorates when the cuprous chloride contained in the pressure swing adsorbent reacts with oxygen molecules (O₂) and is oxidized to become cupric chloride (CuCl₂), and it is thus preferable to remove the oxygen molecule contained in the carbon-monoxide-containing gas before bringing the carbon monoxide into contact with the pressure swing adsorbent for purification by the pressure swing adsorption method.

For example, PTL 3 discloses a technology for removing an oxygen molecule from a carbon-monoxide-containing gas by contacting the carbon-monoxide-containing gas containing carbon monoxide and oxygen molecules as an impurity with activated carbon. However, since the ability of activated carbon to adsorb oxygen molecules is low, a large amount of activated carbon is required to reduce the concentration of oxygen molecules in the carbon-monoxide-containing gas to less than 1 vol ppm. Therefore, there is a problem that a large-scale equipment is required to industrially perform removal of the oxygen molecules from the carbon-monoxide-containing gas and it is difficult to easily remove the oxygen molecule.

An object of the present invention is to provide a method for removing an oxygen molecule that can easily remove oxygen molecules mixed in a carbon-monoxide-containing gas. In addition, another object of the present invention is to provide a method for purifying carbon monoxide with which it is possible to obtain high-purity carbon monoxide.

### Solution to Problem

To solve the above objects, one aspect of the present invention is as the following [1] to [13].
[1] A method for removing an oxygen molecule including
   a catalyst preparation step of performing heat treatment of a platinum catalyst containing platinum placed in a heat treatment vessel in which pressure is maintained at less than an atmospheric pressure, while supplying and passing an inert gas through the heat treatment vessel, to remove water contained in the platinum catalyst from the platinum catalyst until a concentration of water contained in the inert gas discharged from the heat treatment vessel after being supplied to the heat treatment vessel and used in the heat treatment is less than 1000 vol ppm, and
   an oxygen molecule removal step of bringing a carbon-monoxide-containing gas that contains carbon monoxide and an oxygen molecule as an impurity and that has a concentration of the carbon monoxide of 10 vol% or more and a concentration of water of less than 1000 vol ppm, into contact with the platinum catalyst subjected to the heat treatment in the catalyst preparation step, to remove the oxygen molecule from the carbon-monoxide-containing gas, and obtaining a gas after oxygen molecule removal with a reduced concentration of the oxygen molecule.
[2] The method for removing an oxygen molecule according to [1], in which a concentration of the oxygen molecule contained in the carbon-monoxide-containing gas is less than 2000 vol ppm.
[3] The method for removing an oxygen molecule according to [1] or [2], in which the carbon-monoxide-containing gas further contains at least one selected from a hydrogen molecule, a nitrogen molecule, carbon dioxide, argon, helium, and methane.
[4] The method for removing an oxygen molecule according to any one of [1] to [3], in which in the oxygen molecule removal step, the reduced concentration of the oxygen molecule contained in the gas after oxygen molecule removal is less than 1 vol ppm.
[5] The method for removing an oxygen molecule according to any one of [1] to [4], in which in the oxygen molecule removal step, the carbon-monoxide-containing gas is introduced into and passed through a reaction tube filled with the platinum catalyst subjected to the heat treatment, and a rate at which the carbon-monoxide-containing gas is introduced into the reaction tube is 500/h or more and 1500/h or less in terms of space velocity.
[6] The method for removing an oxygen molecule according to any one of [1] to [5], in which for the heat treatment in the catalyst preparation step, a pressure condition is -0.09 MPaG or more and -0.01 MPaG or less, and a temperature condition is 150°C or more and 300°C or less.
[7] The method for removing an oxygen molecule according to any one of [1] to [6], in which the inert gas is at least one selected from a nitrogen molecule, helium, and argon.
[8] The method for removing an oxygen molecule according to any one of [1] to [7], further including a dehydration step of removing water in the carbon-monoxide-containing gas using a desiccant before the oxygen molecule removal step.
[9] The method for removing an oxygen molecule according to [8], in which the desiccant is at least one selected from molecular sieves 3A, molecular sieves 4A, and high silica zeolite.
[10] A method for purifying carbon monoxide in which the carbon-monoxide-containing gas is purified by using the method for removing an oxygen molecule according to any one of [1] to [9], the method including
   the catalyst preparation step,
   the oxygen molecule removal step,
   a carbon dioxide removal step of removing a carbon dioxide generated in the oxygen molecule removal step from the gas after oxygen molecule removal using a carbon dioxide adsorbent to obtain a gas after carbon dioxide removal with a reduced concentration of carbon dioxide, and
   a pressure swing adsorption step of recovering carbon monoxide from the gas after carbon dioxide removal by a pressure swing adsorption method to obtain purified carbon monoxide having a purity of 99.95 vol% or more.
[11] The method for purifying carbon monoxide according to [10], in which the carbon dioxide adsorbent is at least one selected from molecular sieves 4A, molecular sieves 13X, activated carbon, and metal oxides.
[12] The method for purifying carbon monoxide according to [10] or [11], in which in the carbon dioxide removal step, the reduced concentration of the carbon dioxide contained in the gas after carbon dioxide removal is less than 50 vol ppm.
[13] The method for purifying carbon monoxide according to any one of [10] to [12], in which the pressure swing adsorption step includes
   an adsorption step of allowing a pressure swing adsorbent containing a monovalent copper compound and zeolite to adsorb the carbon monoxide in the gas after carbon dioxide removal under a pressure of 0.3 MPaG or more and 0.9 MPaG or less, and
   a desorption step of placing the pressure swing adsorbent to which the carbon monoxide has been adsorbed in the adsorption step under a pressure of -0.08 MPaG or more and -0.01 MPaG or less to desorb the carbon monoxide adsorbed to the pressure swing adsorbent.

### Advantageous Effects of Invention

In the method for removing an oxygen molecule according to the present invention, oxygen molecules mixed in the carbon-monoxide-containing gas can be easily removed. In addition, in the method for purifying carbon monoxide according to the present invention, it is possible to obtain high-purity carbon monoxide.

### Brief Description of Drawings

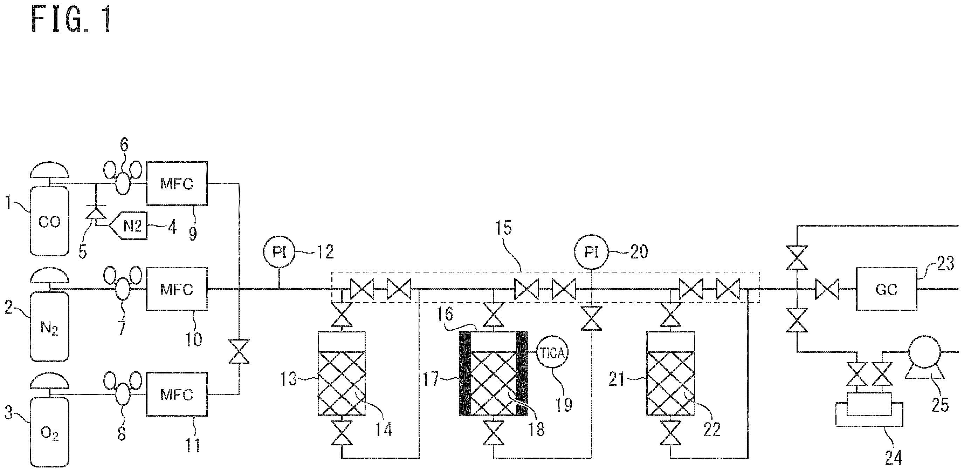

FIG. 1 is a schematic diagram illustrating an example of a purification treatment apparatus for explaining an embodiment of a method for purifying carbon monoxide according to the present invention, and is a diagram of a part for performing a catalyst preparation step, a dehydration step, an oxygen molecule removal step, and a carbon dioxide removal step; and

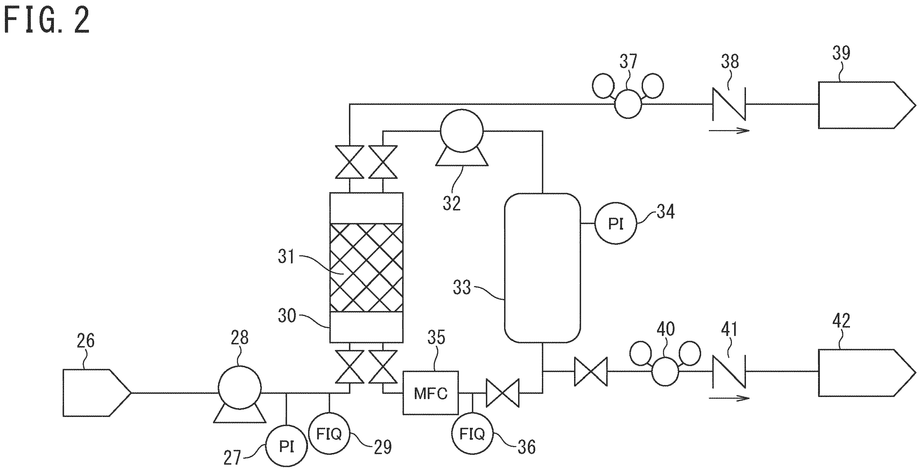

FIG. 2 is a schematic diagram illustrating an example of a purification treatment apparatus for explaining an embodiment of a method for purifying carbon monoxide according to the present invention, and is a diagram of a part for performing a pressure swing adsorption step.

### Description of Embodiments

An embodiment of the present invention is described below. The present embodiment shows an example of the present invention and the present invention is not limited to the present embodiment. In addition, various modifications or improvements may be made to the present embodiment, and forms with such modifications or improvements may also be included in the present invention.

A method for removing an oxygen molecule according to an embodiment of the present invention includes a catalyst preparation step and an oxygen molecule removal step.

The catalyst preparation step is a step of performing heat treatment of a platinum catalyst containing platinum placed in a heat treatment vessel in which pressure is maintained at less than an atmospheric pressure while supplying and passing an inert gas through the heat treatment vessel (that is, performing heat treatment of the platinum catalyst under a flow of an inert gas), to remove water contained in the platinum catalyst from the platinum catalyst. This heat treatment is carried out until the concentration of water contained in the inert gas discharged from the heat treatment vessel after being supplied to the heat treatment vessel and used in the heat treatment is less than 1000 vol ppm.

The oxygen molecule removal step is a step of bringing a carbon-monoxide-containing gas that contains carbon monoxide and an oxygen molecule as an impurity and that has a concentration of the carbon monoxide of 10 vol% or more and a concentration of water of less than 1000 vol ppm into contact with the platinum catalyst subjected to the heat treatment in the catalyst preparation step, to remove the oxygen molecule from the carbon-monoxide-containing gas, and obtaining a gas after oxygen molecule removal with a reduced concentration of the oxygen molecule. In the oxygen molecule removal step, one molecule of oxygen reacts with two molecules of carbon monoxide to remove the oxygen molecule, and as a result of the reaction, two molecules of carbon dioxide (CO₂) are generated. A platinum catalyst is a catalyst that accelerates this oxidation-reduction reaction.

In a case of removing an oxygen molecule in the oxygen molecule removal step, using a platinum catalyst having a water content sufficiently reduced in the catalyst preparation step allows obtaining a gas after oxygen molecule removal in which oxygen molecules has been sufficiently removed from the carbon-monoxide-containing gas, for example, obtaining a gas after oxygen molecule removal having a concentration of the oxygen molecules of less than 1 vol ppm.

In addition, since the platinum catalyst has a higher ability to remove oxygen molecules than activated carbon or the like, a gas after oxygen molecule removal in which oxygen molecules have been sufficiently removed from the carbon-monoxide-containing gas can be obtained without using a large amount of platinum catalyst. Accordingly, even in a case of industrially producing the gas after oxygen molecule removal having a concentration of the oxygen molecules of less than 1 vol ppm, the oxygen molecules mixed in the carbon-monoxide-containing gas can be easily removed without using large-scale equipment.

A method for purifying carbon monoxide according to an embodiment of the present invention is a method for purifying a carbon-monoxide-containing gas using the method for removing an oxygen molecule according to the above-described present embodiment, and includes a catalyst preparation step, an oxygen molecule removal step, a carbon dioxide removal step, and a pressure swing adsorption step.

The catalyst preparation step and the oxygen molecule removal step are as described above.

The carbon dioxide removal step is a step of removing the carbon dioxide generated in the oxygen molecule removal step, from the gas after oxygen molecule removal using a carbon dioxide adsorbent to obtain a gas after carbon dioxide removal with a reduced concentration of carbon dioxide.

The pressure swing adsorption step is a step of recovering carbon monoxide from the gas after carbon dioxide removal by a pressure swing adsorption method to obtain purified carbon monoxide having a purity of 99.95 vol% or more.

Since oxygen molecules are removed in the oxygen molecule removal step and carbon dioxide is removed in the carbon dioxide removal step, the amount of oxygen molecules and carbon dioxide contained in the gas after carbon dioxide removal to be supplied to the pressure swing adsorption step is extremely small. Therefore, the carbon monoxide adsorption performance of the pressure swing adsorbent is less likely to deteriorate. Accordingly, in the pressure swing adsorption step, carbon monoxide is adsorbed on the pressure swing adsorbent with high efficiency, so that high-purity carbon monoxide (that is, purified carbon monoxide with a purity of 99.95 vol% or more) can be produced.

Such high-purity carbon monoxide can be suitably used as a high-purity gas used in semiconductor manufacturing processes. For example, it can be suitably used as an additive gas in a dry etching step when manufacturing silicon semiconductors for non-volatile memories such as NAND flash memory.

The method for removing an oxygen molecule and the method for purifying carbon monoxide according to the present embodiment will be described in further detail below.

### [Platinum catalyst]

The platinum catalyst used in the method for removing an oxygen molecule and the method for purifying carbon monoxide according to the present embodiment is not particularly limited as long as it contains platinum, but is preferably a catalyst in which platinum is supported on a carrier. The type of carrier on which platinum is supported is not particularly limited, but the carrier is preferably at least one selected from alumina (Al₂O₃), activated carbon, and zeolite.

The shape of the platinum catalyst is not particularly limited, and may be, for example, powdery, granular, spherical, or ring-shaped.

The amount of platinum supported on the carrier in the platinum catalyst (hereinafter sometimes referred to as "supported amount"), that is, the mass ratio of platinum in the platinum catalyst, may affect the oxygen molecule removal performance in the oxygen molecule removal step. The supported amount of platinum in the platinum catalyst is preferably 0.05 mass% or more and 5 mass% or less, and more preferably 0.5 mass% or more and 5 mass% or less.

In a case where the supported amount of platinum in the platinum catalyst is within the above range, the oxygen molecule removal performance is sufficiently high, and the cost can be suppressed. An example of a platinum catalyst that can be suitably used concludes a platinum catalyst manufactured by JGC Catalysts and Chemicals Ltd. (product code NA061RZ). This platinum catalyst is obtained by supporting platinum on γ-alumina, which is a carrier, and is a ring-shaped tablet-molded product, and the supported amount of platinum is 0.5 mass%.

### [Catalyst preparation step]

In the catalyst preparation step, the platinum catalyst is subjected to heat treatment under a flow of an inert gas to remove water contained in the platinum catalyst from the platinum catalyst, and the temperature of the heat treatment is preferably 150°C or more and 300°C or less. By performing the heat treatment under the above temperature conditions, water can be sufficiently removed from the platinum catalyst while suppressing a decrease in the life of the platinum catalyst. The temperature condition of the heat treatment is more preferably 170°C or more and 280°C or less, and still more preferably 200°C or more and 250°C or less.

In addition, the pressure condition of the heat treatment is preferably -0.09 MPaG or more and -0.01 MPaG or less. By performing the heat treatment under the above pressure conditions, water can be sufficiently removed from the platinum catalyst. The pressure condition of the heat treatment is more preferably -0.09 MPaG or more and -0.02 MPaG or less, and still more preferably -0.04 MPaG or more and -0.02 MPaG or less.

In a case where a large amount of water remains in the platinum catalyst, the oxygen molecule removal performance of the platinum catalyst deteriorates in the subsequent oxygen molecule removal step. Accordingly, it is necessary to carry out the heat treatment until the concentration of water contained in the inert gas discharged from the heat treatment vessel after being supplied into the heat treatment vessel and used for the heat treatment is less than 1000 vol ppm.

In a case where the concentration of water contained in the inert gas discharged from the heat treatment vessel is 1000 vol ppm or more, there is a risk that a large amount of water will remain in the platinum catalyst. As a result, the oxygen molecules cannot be sufficiently removed from the carbon-monoxide-containing gas in the oxygen molecule removal step, which may cause difficulty in that the concentration of the oxygen molecules in the gas after oxygen molecule removal is, for example, less than 1 vol ppm.

The heat treatment is performed until the concentration of water contained in the inert gas discharged from the heat treatment vessel is preferably less than 1000 vol ppm, more preferably less than 10 vol ppm.

The concentration of water contained in the inert gas discharged from the heat treatment vessel can be measured, for example, with a Fourier transform infrared spectrophotometer. Accordingly, the concentration of water contained in the inert gas discharged from the heat treatment vessel is measured with a Fourier transform infrared spectrophotometer at any time, and the heat treatment is preferably performed until the concentration of water is less than 1000 vol ppm. However, an appropriate heat treatment time may be determined in advance based on past results.

The flow rate of the inert gas supplied to the heat treatment vessel is not particularly limited, but if the volume of the heat treatment vessel is about 120 mL to 1200 mL, it is preferably 1 L/min or more and 10 L/min or less. By performing the heat treatment at the above flow rate, water can be sufficiently removed from the platinum catalyst.

The type of inert gas is not particularly limited, but it is preferably at least one selected from nitrogen molecules (N₂), helium (He), and argon (Ar).

The type of heat treatment vessel used in the catalyst preparation step is not particularly limited, but, for example, tubular, rectangular parallelepiped, or spherical vessels can be used.

### [Carbon-monoxide-containing gas]

The carbon-monoxide-containing gas to be treated by the method for removing an oxygen molecule and the method for purifying carbon monoxide according to the present embodiment contains carbon monoxide and oxygen molecules as an impurity, and has a concentration of carbon monoxide of 10 vol% or more and the concentration of water is less than 1000 vol ppm. Since the concentration of water is less than 1000 vol ppm, oxygen molecules can be sufficiently removed from the carbon-monoxide-containing gas in the oxygen molecule removal step. The concentration of water in the carbon-monoxide-containing gas is preferably less than 1000 vol ppm, more preferably less than 10 vol ppm.

Since the oxygen molecule removal performance of the platinum catalyst is affected by the concentration of carbon monoxide contained in the carbon-monoxide-containing gas, the concentration of carbon monoxide of 10 vol% or more makes the oxygen molecule removal performance of the platinum catalyst excellent. Therefore, in the oxygen molecule removal step, it is possible to easily remove the oxygen molecule contained in the carbon-monoxide-containing gas, and the concentration of the oxygen molecules contained in the gas after oxygen molecule removal is made easier to be less than 1 vol ppm. The concentration of carbon monoxide contained in the carbon-monoxide-containing gas is preferably 10 vol% or more, more preferably 30 vol% or more. In addition, the concentration of carbon monoxide contained in the carbon-monoxide-containing gas may be 10 vol% or more and 99 vol% or less, and is preferably 20 vol% or more and 90 vol% or less.

The concentration of oxygen molecules contained in the carbon-monoxide-containing gas is preferably less than 2000 vol ppm. Since the oxygen molecule removal performance of the platinum catalyst is affected by the concentration of oxygen molecules contained in the carbon-monoxide-containing gas, in a case where the concentration of oxygen molecules is less than 2000 vol ppm, the concentration of oxygen molecules contained in the gas after oxygen molecule removal is made easier to be less than 1 vol ppm in the oxygen molecule removal step. The concentration of oxygen molecules contained in the carbon-monoxide-containing gas is more preferably less than 2000 vol ppm, still more preferably less than 100 vol ppm.

The carbon-monoxide-containing gas may contain other components together with carbon monoxide, oxygen molecules, and water. For example, at least one selected from a hydrogen molecule (H₂), a nitrogen molecule, carbon dioxide, argon, helium, and methane (CH₄) may be further contained.

### [Dehydration step]

In the method for removing an oxygen molecule and the method for purifying carbon monoxide according to the present embodiment, a dehydration step for removing water in the carbon-monoxide-containing gas using a desiccant is also performed before the oxygen molecule removal step. The dehydration step is optionally performed, and it may be determined whether or not to perform, according to the concentration of water in the carbon-monoxide-containing gas.

In a case where the concentration of water in the carbon-monoxide-containing gas is more reduced, the concentration of oxygen molecules contained in the gas after oxygen molecule removal is made easier to be less than 1 vol ppm in the oxygen molecule removal step. If the dehydration step is performed, even a carbon-monoxide-containing gas having the concentration of water of 1000 vol ppm or more can be subjected to the method for removing an oxygen molecule and the method for purifying carbon monoxide according to the present embodiment.

The type of desiccant used in the dehydration step is not particularly limited, and a general desiccant can be used. For example, zeolites can be used, and specific examples thereof include at least one selected from molecular sieves 3A, molecular sieves 4A, and high silica zeolite.

### [Oxygen molecule removal step]

In the oxygen molecule removal step, the carbon-monoxide-containing gas is brought into contact with the platinum catalyst subjected to the heat treatment in the catalyst preparation step, to convert the oxygen molecules into carbon dioxide in the carbon-monoxide-containing gas, and to obtain a gas after oxygen molecule removal with a reduced concentration of the oxygen molecule. Since the oxidation-reduction reaction between carbon monoxide and oxygen molecules is accelerated by the platinum catalyst, the oxygen molecules are removed from the carbon-monoxide-containing gas to generate carbon dioxide. The above-described oxidation-reduction reaction is represented by the following formula.

2CO + O₂ → 2CO₂

In the oxygen molecule removal step, the oxygen molecules are sufficiently removed from the carbon-monoxide-containing gas, and the concentration of the oxygen molecules contained in the gas after oxygen molecule removal is preferably less than 1 vol ppm, and more preferably less than 0.1 vol ppm. Thus, the deterioration of the carbon monoxide adsorption performance of the pressure swing adsorbent in the subsequent pressure swing adsorption step is further suppressed.

In the oxygen molecule removal step, a carbon-monoxide-containing gas is introduced into and passed through a reaction tube filled with a platinum catalyst subjected to heat treatment. It is efficient and preferable to use the heat treatment vessel used in the catalyst preparation step as it is as the reaction tube (in this specification, the reaction tube used in the oxygen molecule removal step may be referred to as the heat treatment vessel). The material of the reaction tube is not particularly limited, but stainless steel or the like is preferable.

The rate at which the carbon-monoxide-containing gas is introduced into the reaction tube is preferably 500/h or more and 1500/h or less in terms of space velocity. Thus, oxygen molecules can be removed more reliably and efficiently from the carbon-monoxide-containing gas. The rate (space velocity) at which the carbon-monoxide-containing gas is introduced into the reaction tube is more preferably 500/h or more and 1200/h or less, and more preferably 500/h or more and 1000/h or less.

The temperature conditions when the carbon-monoxide-containing gas is brought into contact with the platinum catalyst in the oxygen molecule removal step are not particularly limited, but it is preferably 100°C or more and 300°C or less. Thus, oxygen molecules can be sufficiently removed from the carbon-monoxide-containing gas while suppressing a decrease in the life of the platinum catalyst. The above temperature condition is more preferably 150°C or more and 250°C or less, and still more preferably 150°C or more and 200°C or less.

The amount of the platinum catalyst used in the oxygen molecule removal step (for example, the amount of the platinum catalyst filled in one reaction tube) is not particularly limited, but it is preferably 30 g or more and 80 g or less per 1 L/min flow rate of the carbon-monoxide-containing gas. In a case where the amount of the platinum catalyst used in the oxygen molecule removal step is within the above range, the oxygen molecule removal performance is sufficiently high and the cost is favorable.

The method for analyzing the composition of the carbon-monoxide-containing gas and the gas after oxygen molecule removal is not particularly limited, but a method for analyzing using gas chromatography and a Fourier transform infrared spectrophotometer can be employed. Specific examples of the gas chromatograph include the gas chromatograph Tracera (trade name) manufactured by Shimadzu Corporation, and specific examples of the Fourier transform infrared spectrophotometer include the Fourier transform infrared spectrophotometer Nicolet (registered trademark) iS10 FT-IR manufactured by Thermo Fisher Scientific, Inc.

Examples of gas chromatograph detectors include a thermal conductivity detector (TCD) and a barrier discharge ionization detector (BID), and examples of column include MICROPACKED ST (trade name) manufactured by Shinwa Chemical Industries Ltd. and CP-Molsieve 5Å manufactured by Agilent Technologies, Inc.

In the method for purifying carbon monoxide according to the present embodiment, after performing the catalyst preparation step, the dehydration step, and the oxygen molecule removal step (the dehydration step may not be performed), the carbon dioxide removal step and the pressure swing adsorption step is performed to obtain the purified carbon monoxide having a purity of 99.95 vol% or more.

### [Carbon dioxide removal step]

The carbon dioxide removal step is a step of removing the carbon dioxide generated in the oxygen molecule removal step, from the gas after oxygen molecule removal using a carbon dioxide adsorbent to obtain a gas after carbon dioxide removal with a reduced concentration of carbon dioxide.

In the carbon dioxide removal step, the concentration of carbon dioxide contained in the gas after carbon dioxide removal is preferably less than 50 vol ppm, more preferably less than 1 vol ppm. Thus, purified carbon monoxide with higher purity can be obtained in the subsequent pressure swing adsorption step.

The type of carbon dioxide adsorbent is not particularly limited, but at least one selected from molecular sieves 4A, molecular sieves 13X, activated carbon, and metal oxides can be used. Specific examples of metal oxides include magnesium oxide (MgO), calcium oxide (CaO), strontium oxide (SrO), barium oxide (BaO), cerium oxide (CeO₂), and zirconium oxide (ZrO₂).

### [Pressure swing adsorption step]

The pressure swing adsorption step is a step of recovering carbon monoxide from the gas after carbon dioxide removal by a pressure swing adsorption method to obtain purified carbon monoxide having a purity of 99.95 vol% or more. The pressure swing adsorption step may include an adsorption step and a desorption step. The adsorption step is a step of causing the carbon monoxide in the gas after carbon dioxide removal to be adsorbed to the pressure swing adsorbent, and the desorption step is a step of desorbing carbon monoxide from the pressure swing adsorbent that adsorbed carbon monoxide in the adsorption step.

The type of the pressure swing adsorbent is not particularly limited as long as it can adsorb carbon monoxide, but a pressure swing adsorbent containing a monovalent copper compound and zeolite is preferable. Specific examples of the monovalent copper compound include cuprous chloride, cuprous bromide (CuBr), and cuprous acetate (CuOAc), and cuprous chloride is more preferable. A pressure swing adsorbent in which activated carbon or alumina is used instead of zeolite as a carrier and a monovalent copper compound such as cuprous chloride is supported on the activated carbon or alumina can be used.

In the adsorption step, it is preferable to cause the carbon monoxide in the gas after carbon dioxide removal to be adsorbed to the pressure swing adsorbent under a pressure of 0.3 MPaG or more and 0.9 MPaG or less. In a case of performing adsorption under the above pressure conditions, purified carbon monoxide with higher purity can be easily obtained. The above pressure condition is more preferably 0.5 MPaG or more and 0.9 MPaG or less, and still more preferably 0.7 MPaG or more and 0.9 MPaG or less.

In the desorption step, it is preferable to place the pressure swing adsorbent that adsorbed carbon monoxide in the adsorption step under a pressure of -0.08 MPaG or more and -0.01 MPaG or less to desorb the carbon monoxide adsorbed to the pressure swing adsorbent. In a case of performing the desorption under the above pressure conditions, purified carbon monoxide with higher purity can be easily obtained. The above pressure condition is more preferably -0.06 MPaG or more and -0.02 MPaG or less, and still more preferably -0.04 MPaG or more and -0.02 MPaG or less.

A cleaning step for cleaning the pressure swing adsorbent with a cleaning gas may be further provided between the adsorption step and the desorption step. The type of gases that can be used as the cleaning gas is not particularly limited as long as it can clean the pressure swing adsorbent, and a part of the resulting purified carbon monoxide on conclusion of the pressure swing adsorption step can also be used as the cleaning gas. In addition, when the part of the purified carbon monoxide is used as the cleaning gas, the post-cleaning gas (off gas 39) may be returned to the oxygen molecule removal step.

Next, an example of a purification treatment apparatus capable of performing the method for purifying carbon monoxide according to the present embodiment will be described with reference to FIG. 1 and FIG. 2. The purification treatment apparatus illustrated in FIGS. 1 and 2 includes a carbon monoxide gas container 1 filled with carbon monoxide, a nitrogen gas container 2 filled with a nitrogen gas, and an oxygen gas container 3 filled with an oxygen gas.

In addition, the purification treatment apparatus illustrated in FIGS. 1 and 2 includes a dehydration tube 13 for performing the dehydration step, a reaction tube 16 for performing the catalyst preparation step and the oxygen molecule removal step, a carbon dioxide removal tube 21 for performing the carbon dioxide removal step, and a pressure swing adsorption tower 30 for performing pressure swing adsorption step (adsorption step and desorption step).

The reaction tube 16 is, for example, made of stainless steel, and filled with a platinum catalyst 18. The reaction tube 16 also includes a heater 19 that heats the reaction tube 16 and a heat insulation material 17 that covers the surface of the reaction tube 16 to insulate.

When performing the catalyst preparation step, while a nitrogen gas is supplied from the nitrogen gas supply line 4 to the inside of the reaction tube 16 via a pipe, and passed through the reaction tube 16, the pressure inside of the reaction tube 16 is reduced to a predetermined pressure by the vacuum pump 25 and the platinum catalyst 18 inside the reaction tube 16 was heated to a predetermined temperature by the heater 19. Thus, water is removed from the platinum catalyst 18. Reference numeral 5 in FIG. 1 denotes a check valve.

The pressure inside the reaction tube 16 can be measured by pressure gauge 20. In addition, the flow rate of the nitrogen gas supplied to the inside of the reaction tube 16 can be adjusted by the mass flow controller 9.

The nitrogen gas discharged from the reaction tube 16 is sent to a Fourier transform infrared spectrophotometer 24, so that the concentration of contained water can be measured. As a result, the concentration of water contained in the nitrogen gas discharged from the reaction tube 16 can be monitored during the catalyst preparation step.

A carbon monoxide gas, a nitrogen gas, and an oxygen gas are flowed from the carbon monoxide gas container 1, the nitrogen gas container 2, and the oxygen gas container 3, respectively, and the flow rates of the respective gases are adjusted by mass flow controllers 9, 10, and 11. Thus, a carbon-monoxide-containing gas with a desired composition can be prepared. Reference numerals 6, 7, and 8 in FIG. 1 denote pressure reducing valves.

When performing the oxygen molecule removal step, the prepared carbon-monoxide-containing gas is supplied to the inside of the reaction tube 16 via a pipe. Thus, an oxygen gas is removed from the carbon-monoxide-containing gas, and a gas after oxygen molecule removal with a reduced concentration of the oxygen molecule is obtained. Temperature and pressure can be controlled by a heater 19 and a vacuum pump 25 in the same manner as in the catalyst preparation step. In addition, the flow rate (space velocity) of the carbon-monoxide-containing gas can be controlled by mass flow controllers 9, 10, and 11.

In a case of performing the dehydration step, the carbon-monoxide-containing gas is sent to the dehydration tube 13 filled with the desiccant 14 prior to being sent to the reaction tube 16, to remove water contained in the carbon-monoxide-containing gas. Then, the carbon-monoxide-containing gas from which water has been removed is discharged from the dehydration tube 13, and this carbon-monoxide-containing gas is sent to the reaction tube 16 to perform the oxygen molecule removal step.

In addition, in a case where the carbon-monoxide-containing gas is sent to the gas chromatograph 23 and Fourier transform infrared spectrophotometer 24 via the raw material analysis line 15 (the portion surrounded by the broken line in FIG. 1) prior to being passed through the dehydration tube 13 and the reaction tube 16, the carbon-monoxide-containing gas can be analyzed to measure the concentration of each component contained in the carbon-monoxide-containing gas.

Next, the gas after oxygen molecule removal discharged from the reaction tube 16 is passed through the carbon dioxide removal tube 21 filled with the carbon dioxide adsorbent 22. Thus, the carbon dioxide removal step is performed, carbon dioxide is removed from the gas after oxygen molecule removal to obtain the gas after carbon dioxide removal 26 with a reduced concentration of carbon dioxide.

Subsequently, the gas after carbon dioxide removal 26 is compressed to a predetermined pressure by the compressor 28, and then passed through the pressure swing adsorption tower 30 filled with the pressure swing adsorbent 31. The pressure of the compressed gas after carbon dioxide removal 26 can be measured with a pressure gauge 27. In addition, the total amount of the gas after carbon dioxide removal 26 that passed through the pressure swing adsorption tower 30 can be measured by an integrating flow meter 29.

Carbon monoxide in the gas after carbon dioxide removal 26 supplied to the pressure swing adsorption tower 30 is adsorbed to the pressure swing adsorbent 31. Components other than carbon monoxide that are not adsorbed in this adsorption step are discharged from the pressure swing adsorption tower 30 and exhausted as off gas 39. In FIG. 2, reference numeral 37 denotes a pressure reducing valve, and reference numeral 38 denotes a check valve.

After the adsorption step is completed, the cleaning gas filled in the surge tank 33 is passed through the pressure swing adsorption tower 30 while controlling the flow rate of the cleaning gas by the mass flow controller 35 and measuring the total amount of the cleaning gas by the integrating flow meter 36, to clean the pressure swing adsorbent 31. Thus, impurities remaining in the pressure swing adsorption tower 30 are removed (cleaning step). Reference numeral 34 in FIG. 2 denotes a pressure gauge for measuring the pressure inside the surge tank 33.

After the cleaning step is completed, the pressure in the pressure swing adsorption tower 30 is reduced to a predetermined pressure by the vacuum pump 32 to desorb carbon monoxide from the pressure swing adsorbent 31 (desorption step). The carbon monoxide that is desorbed and discharged from the pressure swing adsorption tower 30 is filled into a surge tank 33. A part of the carbon monoxide filled in the surge tank 33 is recovered as purified carbon monoxide 42, and the remainder is used as cleaning gas. In FIG. 2, reference numeral 40 denotes a pressure reducing valve, and reference numeral 41 denotes a check valve.

### Examples

Hereinafter, the present invention will be described more specifically with reference to examples and comparative examples.

### [Example 1]

Example 1 is an example of the invention relating to a method for removing an oxygen molecule. Using a purification treatment apparatus having a configuration similar to that of the purification treatment apparatus illustrated in FIG. 1, a catalyst preparation step was performed to subject a platinum catalyst to a heat treatment, and an oxygen molecule removal step was performed to remove an oxygen molecule from a carbon-monoxide-containing gas.

The platinum catalyst used is a platinum catalyst manufactured by JGC Catalysts and Chemicals Ltd. (product code NA061RZ). This platinum catalyst is obtained by supporting platinum on γ-alumina, which is a carrier, and the supported amount of platinum is 0.5 mass%. In addition, this platinum catalyst is a ring-shaped tablet-molded product having an outer diameter of 5 mm, an inner diameter of 2 mm, and a height of 4 mm. Furthermore, this platinum catalyst has an average longitudinal crushing strength of 430 N, a specific surface area of 180 m²/g, and a pore volume of 0.4 cm³/g.

Next, the catalyst preparation step will be described. A stainless steel reaction tube having an inner diameter of 3/4 inch and a length of 700 mm was used as a heat treatment vessel. This reaction tube was filled with 70.8 g of a platinum catalyst and heated to 200°C while supplying a nitrogen gas as an inert gas. The supply rate of the nitrogen gas was 500/h in terms of space velocity. Then, the pressure inside the reaction tube was reduced to -0.02 MPaG by a vacuum pump, and heat treatment was performed for 3 hours under a flow of a nitrogen gas while maintaining this pressure. When the concentration of water in the nitrogen gas discharged from the reaction tube after the heat treatment was measured with a Fourier transform infrared spectrophotometer, it was less than 1 vol ppm.

Next, the oxygen molecule removal step will be described. A carbon-monoxide-containing gas that contains carbon monoxide and oxygen molecules as an impurity and that has a concentration of carbon monoxide of 10 vol% or more was prepared as follows. First, a commercially available carbon monoxide gas having a purity of 99.99 vol% or more, a commercially available industrial nitrogen gas having a purity of 99.99 vol% or more, and a commercially available industrial oxygen gas having a purity of 99.99 vol% or more were prepared. Then, while controlling the flow rate using a mass flow controller, the carbon monoxide gas and the nitrogen gas were mixed at a volume ratio of 2.0:1.0, and oxygen gas is added to this mixed gas at a concentration of 69.0 vol ppm.

The concentration of water of resulting carbon-monoxide-containing gas was less than 1 vol ppm. In Example 1, the dehydration step was not performed, and the carbon-monoxide-containing gas that was not subjected to the dehydration treatment was subjected to the oxygen molecule removal step, but for convenience in Table 1, the concentration of water of carbon-monoxide-containing gas was described in the column of a dehydration step. Accordingly, the concentration of water of the inlet gas and the concentration of water of the outlet gas, which will be described later, are the same value.

A gas chromatograph Tracera (trade name) manufactured by Shimadzu Corporation was used to analyze the composition of the prepared carbon-monoxide-containing gas. A thermal conductivity detector (TCD) and a barrier discharge ionization detector (BID) were used as gas chromatograph detectors. In addition, as columns, MICROPACKED ST (trade name) manufactured by Shinwa Chemical Industries Ltd. and CP-Molsieve 5Å manufactured by Agilent Technologies, Inc. were used.

The prepared carbon-monoxide-containing gas was supplied to the reaction tube whose temperature is kept at 150°C, and brought into contact with the platinum catalyst subjected to the heat treatment in the catalyst preparation step to remove oxygen molecules from the carbon-monoxide-containing gas. Thus, a gas after oxygen molecule removal with a reduced concentration of oxygen molecules was obtained. At this time, the supply rate of the carbon-monoxide-containing gas was 1.14 L/min (570/h in terms of space velocity) at 25°C and 0 MPaG.

When the concentration of oxygen molecules in the resulting gas after oxygen molecule removal was measured, it was less than 0.1 vol ppm. In addition, when the concentration of carbon dioxide in the resulting gas after oxygen molecule removal was measured with a Fourier transform infrared spectrophotometer, it was 170 vol ppm. Table 1 summarizes the performance conditions and the obtained results in the catalyst preparation step and the oxygen molecule removal step.

**[Table 1]**

| | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Catalyst preparation step | Catalyst | Platinum/alumina | Platinum/alumina | Platinum/alumina | Platinum/alumina | Platinum/alumina | Platinum/alumina | Platinum | Platinum/alumina | Platinum/alumina |
| | Amount of catalyst (q) | 70.8 | 70.8 | 70.8 | 35.4 | 35.4 | 35.4 | 35.4 | 35.4 | 35.4 |
| | Temperature of heat treatment (°C) | 200 | 150 | 200 | 200 | 200 | 200 | 200 | 200 | 200 |
| | Pressure of heat treatment (MPaG) | -0.02 | -0.02 | -0.02 | -0.02 | -0.02 | -0.02 | -0.02 | -0.02 | -0.02 |
| | Time of heat treatment (h) | 3 | 7 | 3 | 3 | 3 | 3 | 3 | 3 | 3 |
| | Concentration of water of an inert gas (vol ppm) | Less than 1 | 30 | Less than 1 | Less than 1 | Less than 1 | Less than 1 | Less than 1 | Less than 1 | Less than 1 |
| Dehydration step | Desiccant | None | None | None | None | None | None | None | MS3A | None |
| | Concentration of water of inlet gas (vol ppm) | Less than 1 | 30 | Less than 1 | Less than 1 | Less than 1 | 500 | Less than 1 | 500 | Less than 1 |
| | Concentration of water of outlet gas (vol ppm) | Less than 1 | 30 | Less than 1 | Less than 1 | Less than 1 | 500 | Less than 1 | Less than 1 | Less than 1 |
| Oxygen molecule removal step | Carbon monoxide: nitrogen molecules (volume ratio) | 2.0:1.0 | 2.0:1.0 | 2.0:1.0 | 2.0:1.0 | 2.0:1.0 | 2.0:1.0 | 2.0:1.0 | 2.0:1.0 | 1.0:2.0 |
| | Concentration of oxygen molecules of carbon-monoxide-containing gas (vol ppm) | 69 | 69 | 1800 | 69 | 69 | 69 | 69 | 69 | 69 |
| | Concentration of water of carbon-monoxide-containing gas (vol ppm) | Less than 1 | 30 | Less than 1 | Less than 1 | Less than 1 | 500 | Less than 1 | Less than 1 | Less than 1 |
| | Temperature of reaction tube (°C) | 150 | 150 | 150 | 150 | 200 | 150 | 150 | 150 | 150 |
| | Space velocity (1/h) | 570 | 570 | 570 | 1140 | 1140 | 1140 | 1140 | 1140 | 1140 |
| | Concentration of oxygen molecules of gas after oxygen molecule removal (vol ppm) | Less than 0.1 | 0.25 | 0.63 | 0.30 | Less than 0.1 | 0.52 | 0.25 | 0.28 | 0.44 |
| | Concentration of carbon dioxide of gas after oxygen molecule removal (vol ppm) | 170 | 148 | 3600 | 147 | 162 | 143 | 144 | 150 | 146 |

### [Examples 2 to 6, Example 9, and Comparative Examples 1 to 4]

Oxygen molecules were removed from the carbon-monoxide-containing gas to obtain the gas after oxygen molecule removal in the same manner as in Example 1, except that the performance conditions of the catalyst preparation step and the oxygen molecule removal step were changed as shown in Tables 1 and 2. Tables 1 and 2 show the results.

**[Table 2]**

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| Catalyst preparation step | Catalyst | Platinum/alumina | Platinum/alumina | Platinum/alumina | Platinum/alumina | Activated carbon | Activated carbon |
| | Amount of catalyst (g) | 35.4 | 70.8 | 35.4 | 35.4 | 35.4 | 35.4 |
| | Temperature of heat treatment (°C) | 200 | 100 | 200 | 200 | 200 | 200 |
| | Pressure of heat treatment (MPaG) | 0.02 | -0.02 | -0.02 | -0.02 | -0.02 | -0.02 |
| | Time of heat treatment (h) | 3 | 8 | 3 | 3 | 3 | 3 |
| | Concentration of water of an inert gas (vol ppm) | 1050 | 1200 | Less than 1 | Less than 1 | Less than 1 | Less than 1 |
| Dehydration step | Desiccant | None | None | None | None | None | None |
| | Concentration of water of inlet gas (vol ppm) | 1050 | 1200 | Less than 1 | 3000 | Less than 1 | Less than 1 |
| | Concentration of water of outlet gas (vol ppm) | 1050 | 1200 | Less than 1 | 3000 | Less than 1 | Less than 1 |
| Oxygen molecule removal step | Carbon monoxide:nitroaen molecules (volume ratio) | 2.0:1.0 | 2.0:1.0 | 1.0:199 | 2.0:1.0 | 2.0:1.0 | 2.0:1.0 |
| | Concentration of oxygen molecules of carbon-monoxide-containing gas (vol ppm) | 69 | 69 | 69 | 69 | 69 | 69 |
| | Concentration of water of carbon-monoxide-containing gas (vol ppm) | 1050 | 1200 | Less than 1 | 3000 | Less than 1 | Less than 1 |
| | Temperature of reaction tube (°C) | 150 | 150 | 150 | 150 | 150 | 25 |
| | Space velocity (1/h) | 1140 | 570 | 1140 | 1140 | 1140 | 1140 |
| | Concentration of oxygen molecules of gas after oxygen molecule removal (vol ppm) | 1.10 | 2.33 | 24.0 | 4.15 | 10.2 | 58 |
| | Concentration of carbon dioxide of gas after oxygen molecule removal (vol ppm) | 147 | 141 | 98 | 140 | 129 | 28 |

### [Example 7]

Oxygen molecules were removed from the carbon-monoxide-containing gas to obtain the gas after oxygen molecule removal in the same manner as in Example 1, except that the performance conditions of the catalyst preparation step and the oxygen molecule removal step were changed as shown in Table 1. Table 1 shows the results. The platinum catalyst used was a platinum catalyst (product number: NS) manufactured by Nikki-Universal Co., Ltd. This platinum catalyst is granular and has a particle size of 2.5 to 4.0 mm and a packing specific gravity of 0.35 to 0.45 g/cc.

### [Example 8]

Oxygen molecules were removed from the carbon-monoxide-containing gas to obtain a gas after oxygen molecule removal in the same manner as in Example 1, except that a dehydration step is performed before the oxygen molecule removal step to remove water from the carbon-monoxide-containing gas with a desiccant, and then the water-removed carbon-monoxide-containing gas is subjected to the oxygen molecule removal step, and that the performance conditions of the catalyst preparation step and the oxygen molecule removal step were changed as shown in Table 1. Table 1 shows the results.

As the desiccant, 35.5 g of Molecular Sieves 3A manufactured by UNION SHOWA K.K. (referred to as "MS3A" in Tables 1 to 3) was used.

In addition, the dehydration step is performed by passing a carbon-monoxide-containing gas through a dehydration tube filled with a desiccant at an adsorption temperature of 25°C and an inflow rate of 1.14 L/min, and in Table 1 to 3, the concentration of water of the carbon-monoxide-containing gas before it is introduced into the dehydration tube (described as "concentration of water of inlet gas" in the table) and the concentration of water of the carbon-monoxide-containing gas that has been dehydrated by the desiccant and discharged from the dehydration tube (described as "concentration of water of outlet gas" in the table) are described.

### [Comparative Examples 5 and 6]

Oxygen molecules were removed from the carbon-monoxide-containing gas to obtain the gas after oxygen molecule removal in the same manner as in Example 1, except that the performance conditions of the catalyst preparation step and the oxygen molecule removal step were changed as shown in Table 2. Table 2 shows the results. In Comparative Examples 5 and 6, activated carbon was used instead of the platinum catalyst. The activated carbon used was Granular Shirasagi (registered trademark) G2x manufactured by Osaka Gas Chemicals Co., Ltd. and the amount used was 35.4 g.

As can be seen from Tables 1 and 2, in Examples 1 to 9, oxygen molecules were sufficiently removed from the carbon-monoxide-containing gas, and a gas after oxygen molecule removal having a concentration of the oxygen molecules of less than 1 vol ppm was obtained. On the other hand, in Comparative Examples 1 to 6, oxygen molecules were not sufficiently removed, and it was not possible to obtain a gas after oxygen molecule removal having a concentration of the oxygen molecules of less than 1 vol ppm.

### [Example 10]

Example 10 is an example of the invention relating to a method for purifying carbon monoxide. A catalyst preparation step, a dehydration step, an oxygen molecule removal step, a carbon dioxide removal step, and a pressure swing adsorption step were performed using a purification treatment apparatus having the same configuration as the purification treatment apparatus illustrated in FIGS. 1 and 2.

That is, the heat treatment of platinum catalyst was performed in the catalyst preparation step, water in the carbon-monoxide-containing gas is removed using a desiccant in the dehydration step, and oxygen molecules are removed from the dehydrated carbon-monoxide-containing gas in the oxygen molecule removal step, to obtain a gas after oxygen molecule removal. Then, in the carbon dioxide removal step, the carbon dioxide generated in the oxygen molecule removal step was removed from the gas after oxygen molecule removal using a carbon dioxide adsorbent to obtain a gas after carbon dioxide removal. Furthermore, in the pressure swing adsorption step, carbon monoxide was recovered from the gas after carbon dioxide removal by the pressure swing adsorption method to obtain purified carbon monoxide.

The catalyst preparation step, dehydration step, and oxygen molecule removal step were performed in the same manner as in Example 8. The carbon dioxide removal step will be described. The gas after oxygen molecule removal was brought into contact with a carbon dioxide adsorbent at an inflow rate of 1.14 L/min and an adsorption temperature of 50°C to remove the carbon dioxide generated in the oxygen molecule removal step from the gas after oxygen molecule removal and to obtain a gas after carbon dioxide removal with a reduced concentration of carbon dioxide. As the carbon dioxide adsorbent, 50.3 g of Molecular Sieves 4A manufactured by UNION SHOWA K.K. (referred to as "MS4A" in Table 3) was used.

Next, the pressure swing adsorption step will be described. First, the method for producing the pressure swing adsorbent used in the pressure swing adsorption step will be described. 80.5 g of cuprous chloride manufactured by Fujifilm Wako Pure Chemical Corporation and 400 mL of hydrochloric acid having a concentration of 36 mass% were mixed, 100 g of zeolite HSZ (registered trademark) ZSM-5 type manufactured by Tosoh Corporation is then added thereto, and the mixture was stirred for 24 hours while being heated to 60°C. Subsequently, this mixture was filtered and cleaned with distilled water, and then subjected to heat treatment at 100°C for 24 hours while decompressing with a vacuum pump under a flow of nitrogen gas, to obtain a pressure swing adsorbent in which cuprous chloride is supported on the zeolite.

A pressure swing adsorption tower (inner volume: 1 L) is filled with 110 mL of the pressure swing adsorbent produced in this way, and the gas after carbon dioxide removal was passed therethrough, and carbon monoxide in the gas after carbon dioxide removal was adsorbed on a pressure swing adsorbent under pressure (adsorption step). The gas after carbon dioxide removal was supplied at 545/h in terms of space velocity, the pressure in the pressure swing adsorption tower was 0.9 MPaG, and the gas after carbon dioxide removal was supplied for 120 seconds. The exhaust gas from the pressure swing adsorption tower was discharged as off gas.

Subsequently, the cleaning gas was supplied to the pressure swing adsorption tower under atmospheric pressure to clean the pressure swing adsorbent (cleaning step). Carbon monoxide with a purity of 99.95 vol% or more was used as the cleaning gas. In addition, the cleaning gas was supplied at 1090/h in terms of space velocity, and for 60 seconds.

Finally, the pressure inside the pressure swing adsorption tower was reduced to -0.02 MPaG by a vacuum pump to desorb the carbon monoxide adsorbed on the pressure swing adsorbent (desorption step). Thus, the resulting purified carbon monoxide was filled in a surge tank. The purified carbon monoxide with high purity produced in this way was repeatedly used as the cleaning gas described above.

When the purified carbon monoxide filled in the surge tank was analyzed with a gas chromatograph using a barrier discharge ionization detector as a detector, and with a Fourier transform infrared spectrophotometer, the purity of carbon monoxide was 99.99 vol%. Table 3 shows the results. In addition, the trace components contained in the purified carbon monoxide were 100 vol ppm of nitrogen molecules, less than 1 vol ppm of carbon dioxide, less than 1 vol ppm of water, and less than 0.1 vol ppm of oxygen molecules.

**[Table 3]**

| | | Ex. 10 | Ex. 11 | Ex. 12 | Ex. 13 | Ex. 14 | Comp. Ex. 7 | Comp. Ex. 8 |
|---|---|---|---|---|---|---|---|---|
| Catalyst preparation step | Catalyst | Platinum/alumina | Platinum/alumina | Platinum/alumina | Platinum/alumina | Platinum/alumina | Platinum/alumina | None |
| | Amount of catalyst (g) | 35.4 | 35.4 | 35.4 | 35.4 | 70.8 | 35.4 | - |
| | Temperature of heat treatment (°C) | 200 | 200 | 200 | 200 | 200 | 200 | - |
| | Pressure of heat treatment (MPaG) | -0.02 | -0.02 | -0.02 | -0.02 | -0.02 | -0.02 | - |
| | Time of heat treatment (h) | 3 | 3 | 3 | 3 | 3 | 3 | - |
| | Concentration of water of an inert gas (vol ppm) | Less than 1 | Less than 1 | Less than 1 | Less than 1 | Less than 1 | Less than 1 | - |
| Dehydration step | Desiccant | MS3A | MS3A | MS3A | None | None | MS3A | MS3A |
| | Concentration of water of inlet gas (vol ppm) | 500 | 500 | 500 | Less than 1 | Less than 1 | 500 | 500 |
| | Concentration of water of outlet gas (vol ppm) | Less than 1 | Less than 1 | Less than 1 | Less than 1 | Less than 1 | Less than 1 | Less than 1 |
| Oxygen molecule removal step | Carbon monoxide:nitrogen molecules (volume ratio) | 2.0:1.0 | 2.0:1.0 | 2.0:1.0 | 2.0:1.0 | 2.0:1.0 | 2.0:1.0 | 2.0:1.0 |
| | Concentration of oxygen molecules of carbon-monoxide-containing gas (vol ppm) | 69 | 69 | 69 | 69 | 1800 | 69 | 69 |
| | Concentration of water of carbon-monoxide-containing gas (vol ppm) | Less than 1 | Less than 1 | Less than 1 | Less than 1 | Less than 1 | Less than 1 | Less than 1 |
| | Temperature of reaction tube (°C) | 150 | 150 | 150 | 200 | 150 | 150 | - |
| | Space velocity (1/h) | 1140 | 1140 | 1140 | 1140 | 570 | 1140 | - |
| | Concentration of oxygen molecules of gas after oxygen molecule removal (vol ppm) | 0.28 | 0.28 | 0.28 | Less than 0.1 | 0.63 | 0.28 | 69 |
| Carbon dioxide removal step | Adsorbent | MS4A | MS4A | MS4A | MS4A | MS4A | None | None |
| | Concentration of carbon dioxide of gas after carbon dioxide removal (vol ppm) | Less than 1 | Less than 1 | Less than 1 | Less than 1 | Less than 1 | 150 | 10 |
| Pressure swing adsorption step | Adsorption pressure (MPaG) | 0.9 | 0.5 | 0.9 | 0.9 | 0.9 | 0.9 | 0.9 |
| | Desorption pressure (MPaG) | -0.02 | -0.02 | -0.06 | -0.02 | -0.02 | -0.02 | -0.02 |
| | Purity of purified carbon monoxide (vol%) | 99.99 | 99.97 | 99.97 | 99.99 | 99.96 | 99.93 | 99.80 |

### [Examples 11 and 12]

The purified carbon monoxide was obtained in the same manner as in Example 10, except that the pressure conditions in the adsorption step of the pressure swing adsorption step were changed as shown in Table 3. When the purified carbon monoxide was analyzed in the same manner as in Example 10, the purity of carbon monoxide in both Examples 11 and 12 was 99.97 vol%. Table 3 shows the results. In addition, in both Examples 11 and 12, the trace components contained in the purified carbon monoxide were 300 vol ppm of nitrogen molecules, less than 1 vol ppm of carbon dioxide, less than 1 vol ppm of water, and less than 0.1 vol ppm of oxygen molecules.

### [Example 13]

The purified carbon monoxide was obtained in the same manner as in Example 10, except that the dehydration step was not performed and the conditions of the oxygen molecule removal step were changed as shown in Table 3. When the purified carbon monoxide was analyzed in the same manner as in Example 10, the purity of carbon monoxide was 99.99 vol%. Table 3 shows the results. In addition, the trace components contained in the purified carbon monoxide were 60 vol ppm of nitrogen molecules, less than 1 vol ppm of carbon dioxide, less than 1 vol ppm of water, and less than 0.1 vol ppm of oxygen molecules.

### [Example 14]

The purified carbon monoxide was obtained in the same manner as in Example 10, except that the dehydration step was not performed and the conditions of the oxygen molecule removal step were changed as shown in Table 3. When the purified carbon monoxide was analyzed in the same manner as in Example 10, the purity of carbon monoxide was 99.96 vol%. Table 3 shows the results. In addition, the trace components contained in the purified carbon monoxide were 400 vol ppm of nitrogen molecules, less than 1 vol ppm of carbon dioxide, less than 1 vol ppm of water, and less than 0.1 vol ppm of oxygen molecules.

### [Comparative Example 7]

Carbon monoxide was obtained in the same manner as in Example 10, except that the carbon dioxide removal step was not performed. When the purified carbon monoxide was analyzed in the same manner as in Example 10, the purity of carbon monoxide was 99.93 vol%. Table 3 shows the results. In addition, the trace components contained in the carbon monoxide were 600 vol ppm of nitrogen molecules, 100 vol ppm of carbon dioxide, less than 1 vol ppm of water, and less than 0.1 vol ppm of oxygen molecules.

### [Comparative Example 8]

Carbon monoxide was obtained in the same manner as in Example 10, except that the oxygen molecule removal step and the carbon dioxide removal step were not performed. When the purified carbon monoxide was analyzed in the same manner as in Example 10, the purity of carbon monoxide was 99.80 vol%. Table 3 shows the results. In addition, the trace components contained in the carbon monoxide were 1978 vol ppm of nitrogen molecules, 2 vol ppm of carbon dioxide, less than 1 vol ppm of water, and 20 vol ppm of oxygen molecules.

As can be seen from Table 3, in Examples 10 to 14, the purified carbon monoxide with high purity of 99.95 vol% or more was obtained. On the other hand, in Comparative Examples 7 and 8, the purity of resulting carbon monoxide was less than 99.95 vol%, and it was not possible to obtain a carbon monoxide with sufficiently high purity.

### Reference Signs List

1: carbon monoxide gas container
2: nitrogen gas container
3: oxygen gas container
4: nitrogen gas supply line
5, 38, 41: check valve
6, 7, 8, 37, 40: pressure reducing valve
9, 10, 11, 35: mass flow controller
12, 20, 27, 34: pressure gauge
13: dehydration tube
14: desiccant
15: raw material analysis line
16: reaction tube
17: heat insulation material
18: platinum catalyst
19: heater
21: carbon dioxide removal tube
22: carbon dioxide adsorbent
23: gas chromatograph
24: Fourier transform infrared spectrophotometer
25, 32: vacuum pump
26: gas after carbon dioxide removal
28: compressor
29, 36: integrating flow meter
30: pressure swing adsorption tower
31: pressure swing adsorbent
33: surge tank
39: off gas
42: purified carbon monoxide

## Claims

1. A method for removing an oxygen molecule comprising:
a catalyst preparation step of performing heat treatment of a platinum catalyst containing platinum placed in a heat treatment vessel in which pressure is maintained at less than an atmospheric pressure, while supplying and passing an inert gas through the heat treatment vessel, to remove water contained in the platinum catalyst from the platinum catalyst until a concentration of water contained in the inert gas discharged from the heat treatment vessel after being supplied to the heat treatment vessel and used in the heat treatment is less than 1000 vol ppm; and
an oxygen molecule removal step of bringing a carbon-monoxide-containing gas that contains carbon monoxide and an oxygen molecule as an impurity and that has a concentration of the carbon monoxide of 10 vol% or more and a concentration of water of less than 1000 vol ppm, into contact with the platinum catalyst subjected to the heat treatment in the catalyst preparation step, to remove the oxygen molecule from the carbon-monoxide-containing gas, and obtaining a gas after oxygen molecule removal with a reduced concentration of the oxygen molecule.

2. The method for removing an oxygen molecule according to claim 1, wherein a concentration of the oxygen molecule contained in the carbon-monoxide-containing gas is less than 2000 vol ppm.

3. The method for removing an oxygen molecule according to claim 1 or claim 2, wherein the carbon-monoxide-containing gas further contains at least one selected from a hydrogen molecule, a nitrogen molecule, carbon dioxide, argon, helium, and methane.

4. The method for removing an oxygen molecule according to any one of claims 1 to 3, wherein in the oxygen molecule removal step, the reduced concentration of the oxygen molecule contained in the gas after oxygen molecule removal is less than 1 vol ppm.

5. The method for removing an oxygen molecule according to any one of claims 1 to 4, wherein in the oxygen molecule removal step, the carbon-monoxide-containing gas is introduced into and passed through a reaction tube filled with the platinum catalyst subjected to the heat treatment, and a rate at which the carbon-monoxide-containing gas is introduced into the reaction tube is 500/h or more and 1500/h or less in terms of space velocity.

6. The method for removing an oxygen molecule according to any one of claims 1 to 5, wherein for the heat treatment in the catalyst preparation step, a pressure condition is -0.09 MPaG or more and -0.01 MPaG or less, and a temperature condition is 150°C or more and 300°C or less.

7. The method for removing an oxygen molecule according to any one of claims 1 to 6, wherein the inert gas is at least one selected from a nitrogen molecule, helium, and argon.

8. The method for removing an oxygen molecule according to any one of claims 1 to 7, further comprising a dehydration step of removing water in the carbon-monoxide-containing gas using a desiccant before the oxygen molecule removal step.

9. The method for removing an oxygen molecule according to claim 8, wherein the desiccant is at least one selected from molecular sieves 3A, molecular sieves 4A, and high silica zeolite.

10. A method for purifying carbon monoxide, in which the carbon-monoxide-containing gas is purified by using the method for removing an oxygen molecule according to any one of claims 1 to 9, the method comprising:
the catalyst preparation step;
the oxygen molecule removal step;
a carbon dioxide removal step of removing a carbon dioxide generated in the oxygen molecule removal step from the gas after oxygen molecule removal using a carbon dioxide adsorbent to obtain a gas after carbon dioxide removal with a reduced concentration of carbon dioxide; and
a pressure swing adsorption step of recovering carbon monoxide from the gas after carbon dioxide removal by a pressure swing adsorption method to obtain purified carbon monoxide having a purity of 99.95 vol% or more.

11. The method for purifying carbon monoxide according to claim 10, wherein the carbon dioxide adsorbent is at least one selected from molecular sieves 4A, molecular sieves 13X, activated carbon, and metal oxides.

12. The method for purifying carbon monoxide according to claim 10 or claim 11, wherein in the carbon dioxide removal step, the reduced concentration of the carbon dioxide contained in the gas after carbon dioxide removal is less than 50 vol ppm.

13. The method for purifying carbon monoxide according to any one of claims 10 to 12, wherein the pressure swing adsorption step includes
an adsorption step of allowing a pressure swing adsorbent containing a monovalent copper compound and zeolite to adsorb the carbon monoxide in the gas after carbon dioxide removal under a pressure of 0.3 MPaG or more and 0.9 MPaG or less, and
a desorption step of placing the pressure swing adsorbent to which the carbon monoxide has been adsorbed in the adsorption step under a pressure of -0.08 MPaG or more and -0.01 MPaG or less to desorb the carbon monoxide adsorbed to the pressure swing adsorbent.
